# EUROPEAN PATENT APPLICATION

(11) **EP 2 624 650 A1**
(43) Date of publication of application: **07.08.2013**
(21) Application number: 11789215.8
(22) Date of filing: 31.05.2011
(51) Int. Cl.: H04W 72/08

(54) **METHOD, APPARATUS AND BASE STATION FOR PROCESSING RESOURCE COORDINATION**

(30) Priority: 30.09.2010 CN 201010512002
(71) Applicant: Huawei Technologies Co., Ltd., Shenzhen, Guangdong 518129 (CN)
(72) Inventor: LIN, Bo, Shenzhen Guangdong 518129 (CN)
(74) Representative: Isarpatent
(86) International application number: PCT/CN2011/075024
(87) International publication number: WO 2011/150836

(57) **Abstract**

The present invention provides a method, a device, and a base station for resource coordination processing, and a user equipment, where the method for resource coordination processing includes: determining an avoided uplink resource, where the avoided uplink resource is an uplink resource which is set between a local cell and a neighboring cell and used to instruct the neighboring cell to perform interference avoidance or shared resource coordination; and scheduling the user equipment according to the avoided uplink resource. A method for resource coordination processing includes: detecting an avoided uplink resource used by a user equipment of a neighboring cell, where the avoided uplink resource is an uplink resource which is set between a local cell and the neighboring cell and used to instruct the local cell to perform interference avoidance or shared resource coordination; and performing interference avoidance or shared resource coordination on the user equipment according to the avoided uplink resource used by the user equipment. The method and device can implement resource coordination and scheduling between neighboring cells, and effectively avoid interference between neighboring cells.

## Description

This application claims priority to Chinese Patent Application No. 201010512002.0, filed with the Chinese Patent Office on September 30, 2010 and entitled "METHOD, DEVICE, AND BASE STATION FOR RESOURCE COORDINATION PROCESSING", which is incorporated herein by reference in its entirety.

### TECHNICAL FIELD

Embodiments of the present invention relate to an interference avoidance technology, and in particular, to a method, a device, and a base station for resource coordination processing.

### BACKGROUND

To improve performance (including coverage, cell average throughput, cell edge throughput, and uplink/downlink spectrum utilization) requirements of a radio communication network system, in the geographic range of the same coverage, base stations having different transmit power or using different access types may be deployed, forming heterogeneous and multi-layer coverage.

For example, in a long term evolution (Long Term Evolution, LTE for short) system, a base station of a macro cell (such as a macro eNodeB) and a low-power base station (an access point such as a home eNodeB, a micro eNodeB, a pico eNodeB, a relay eNodeB, or an RRH) form a heterogeneous network, used to enhance hot spot coverage in the coverage range of the base station of the macro cell, indoor blind spot (or weak spot) coverage, and cell edge coverage of the macro base station, improve cell average throughput, cell edge throughput, and cell uplink/downlink spectrum utilization, and reduce the network expenditure and capital expenditure CAPEX (capital expenditure) of an operator, and so on.

As network deployment is increasingly complex, and interference in the system is also increasingly serious, which poses a greater challenge to the interference control technology, some low-power base stations may not establish a signaling interface with the macro network, and cannot use an ICIC (inter-cell interference coordination) technology between base stations for interference coordination. In addition, corresponding signaling of ICIC brings a signaling load to the interface between base stations.

Usually, inter-cell interference may include the following cases: 1. Interfere is caused when a user equipment (User Equipment, UE for short) approaches a closed subscriber group (closed subscriber group, CSG for short) to which the user equipment has no access right; when the UE approaches the closed subscriber group cell, although signals from the CSG cell are very strong, because the UE has no access right and cannot access the CSG cell through a handover, strong interference is caused to the UE, which affects quality of service or causes a call drop, and user experience is reduced. In addition, the above interference case may also occur when the UE approaches other restricted access cells, for example, a cell to which the operator forbids access, or a cell with a forbidden handover relationship (configured as "No HO no handover" in a neighboring cell relation table). When the UE approaches the restricted access cells, the above case may occur. 2. When the UE approaches a cell that a serving cell does not wish the UE to access through a handover, although signals of the target cell are very strong, due to some considerations (ping-pong handover, fast incoming handover and outgoing handover, overload, and load balancing), the serving cell does not wish the UE to access the target cell through a handover, and instead, the UE is still served by the serving cell. In this case, because the signals of the target cell are very strong, strong interference is caused, which affects quality of service and even causes a call drop, and the user experience is reduced. 3. When a UE served by a macro cell approaches a low-power cell, because the coverage range of the low-power cell is small, and the UE is far closer to the low-power cell than to the macro cell, uplink signals of the UE cause serious interference to the low-power cell. 4. Because frequency resources are very precious, two operators can obtain more resources by sharing frequencies, and therefore, can provide more radio resources by sharing frequencies of the other party. However, the owner of the shared frequencies has a higher priority to use the frequencies, and the sharer should avoid using the frequencies when the owner uses the frequencies. How to automatically negotiate use of frequency resources is a problem. 5. At present, a terminal can support multiple access technologies simultaneously, and the access technologies may use a same frequency; when the terminal uses multiple access technologies simultaneously, once the same radio resource is scheduled by two systems, strong interference is caused to the UE, which affects quality of service and even causes a call drop, and the user experience is reduced.

To conclude, the prior art cannot effectively avoid the problem of interference received by the UE in the communication system.

### SUMMARY

Embodiments of the present invention provide a method, a device, and a base station for resource coordination processing in order to implement resource coordination and scheduling between neighboring cells, and effectively avoid interference between neighboring cells.

An embodiment of the present invention provides a method for resource coordination processing, including:
determining an avoided uplink resource, wherein the avoided uplink resource is an uplink resource which is set between a local cell and a neighboring cell and used to instruct the neighboring cell to perform interference avoidance or shared resource coordination; and
scheduling the user equipment according to the avoided uplink resource.

The present invention further provides a method for resource coordination processing, including:
detecting an avoided uplink resource used by a user equipment of a neighboring cell, where the avoided uplink resource is an uplink resource which is set between a local cell and the neighboring cell and used to instruct the local cell to perform interference avoidance or shared resource coordination; and
performing interference avoidance or shared resource coordination on the user equipment according to the avoided uplink resource used by the user equipment.

The present invention further provides a method for resource coordination processing, including:
after detecting that downlink interference is caused to a user equipment, obtaining an idle downlink resource of an interfering cell according to a physical cell identity of the interfering cell; and
scheduling the user equipment according to the idle downlink resource of the interfering cell.

The present invention further provides a method for resource coordination processing, including:
when interference occurs, performing communication according to an avoided downlink resource allocated by an interfered cell; and
sending an interference indication message carrying an interference indicator to a base station of an interfering cell, where the interference indicator is an indicator preset by a communication system and used to instruct the interfering cell to avoid using the avoided downlink resource to schedule a user equipment thereof.

The present invention further provides a method for resource coordination processing, including:
receiving from a user equipment an interference indication message carrying an interference indicator, where the interference indicator is an indicator preset by a communication system and used to instruct the interfering cell to use a resource other than an avoided downlink resource to schedule a user equipment thereof; and
according to the interference indication message, using a resource other than the avoided downlink resource to schedule the user equipment thereof.

The present invention further provides a device for resource coordination processing, including:
a first determining module, configured to determine an avoided uplink resource, wherein the avoided uplink resource is an uplink resource which is set between a local cell and a neighboring cell and used to instruct the neighboring cell to perform interference avoidance or shared resource coordination; and
a first scheduling module, configured to schedule a user equipment according to the avoided uplink resource determined by the first determining module.

The present invention further provides a device for resource coordination processing, including:
a detecting module, configured to detect an avoided uplink resource used by a user equipment, where the avoided uplink resource is an uplink resource which is set between a local cell and a neighboring cell and used to instruct the neighboring cell to perform interference avoidance or shared resource coordination; and
a third scheduling module, configured to perform interference avoidance or shared resource coordination on the user equipment according to the voided uplink resource used by the user equipment and detected by the detecting module.

The present invention further provides a device for resource coordination processing, including:
a downlink resource obtaining module, configured to obtain an idle downlink resource of an interfering cell according to a physical cell identity of the interfering cell after determining that downlink interference is caused to a user equipment; and
a fourth scheduling module, configured to schedule the user equipment according to the idle downlink resource of the interfering cell which is obtained by the downlink resource obtaining module.

The present invention further provides a device for resource coordination processing, including:
a receiving module, configured to receive, from a user equipment, an interference indication message carrying an interference indicator, where the interference indicator is an indicator preset by a communication system and used to instruct an interfering cell to avoid using the avoided downlink resource to schedule a user equipment thereof; and
a fifth scheduling module, configured to avoid using the avoided downlink resource to schedule the user equipment thereof according to the interference indication message received by the receiving module.

The present invention further provides a user equipment, including:
a communication module, configured to: when interference occurs, perform communication according to an avoided downlink resource allocated by an interfered cell; and
an indication message sending module, configured to send an interference indication message carrying an interference indicator to a base station of an interfering cell, where the interference indicator is an indicator set by a communication system and used to instruct the interfering cell to avoid using the avoided downlink resource to schedule a user equipment thereof. The present invention further provides a base station, including the above device for resource coordination processing.

The method, device, and base station for resource coordination processing and user equipment according to the embodiments of the present invention, by setting an uplink resource used to instruct a neighboring cell to perform interference avoidance or shared resource coordination, that is, an avoided uplink resource, implement interference avoidance and shared resource coordination between neighboring cells, and thereby can implement resource coordination and scheduling between neighboring cells, and effectively avoid interference between neighboring cells.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.

FIG. 1 is a schematic flowchart of a first embodiment of a method for resource coordination processing according to the present invention;

FIG. 2 is a schematic flowchart of a second embodiment of a method for resource coordination processing according to the present invention;

FIG. 3 is a schematic flowchart of a third embodiment of a method for resource coordination processing according to the present invention;

FIG. 4 is a schematic flowchart of a fourth embodiment of a method for resource coordination processing according to the present invention;

FIG. 5 is a schematic flowchart of a fifth embodiment of a method for resource coordination processing according to the present invention;

FIG. 6 is a schematic flowchart of a sixth embodiment of a method for resource coordination processing according to the present invention;

FIG. 7 is a schematic flowchart of a seventh embodiment of a method for resource coordination processing according to the present invention;

FIG. 8A is a first schematic diagram of a resource group according to an embodiment of the present invention;

FIG. 8B is a second schematic diagram of a resource group according to an embodiment of the present invention;

FIG. 8C is a third schematic diagram of a resource group according to an embodiment of the present invention;

FIG. 9A is a fourth schematic diagram of a resource group according to an embodiment of the present invention;

FIG. 9B is a fifth schematic diagram of a resource group according to an embodiment of the present invention;

FIG. 10 is a schematic flowchart of an eighth embodiment of a method for resource coordination processing according to the present invention;

FIG. 11 is a schematic diagram of a radio resource association according to an embodiment of the present invention;

FIG. 12 is a schematic flowchart of a ninth embodiment of a method for resource coordination processing according to the present invention;

FIG. 13 is a schematic flowchart of a tenth embodiment of a method for resource coordination processing according to the present invention;

FIG. 14 is a schematic flowchart of an eleventh embodiment of a method for resource coordination processing according to the present invention;

FIG. 15 is a schematic flowchart of a twelfth embodiment of a method for resource coordination processing according to the present invention;

FIG. 16 is a schematic flowchart of a thirteenth embodiment of a method for resource coordination processing according to the present invention;

FIG. 17 is a schematic structural diagram of a first embodiment of a device for resource coordination processing according to the present invention;

FIG. 18 is a schematic structural diagram of a second embodiment of a device for resource coordination processing according to the present invention;

FIG. 19 is a schematic structural diagram of a third embodiment of a device for resource coordination processing according to the present invention;

FIG. 20 is a schematic structural diagram of a fourth embodiment of a device for resource coordination processing according to the present invention; and

FIG. 21 is a schematic structural diagram of a fifth embodiment of a device for resource coordination processing according to the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

An embodiment of the present invention provides a method for resource coordination processing. In the method, an uplink resource used to instruct a neighboring cell to perform interference avoidance or shared resource coordination, that is, an avoided uplink resource, is set between a local cell and the neighboring cell, so that the local cell determines the avoided uplink resource and schedules the user equipment according to the avoided uplink resource. Two cases are mainly involved: 1. For the purpose of interference avoidance, when the local cell is a resource owner cell and the neighboring cell is a resource sharer cell, the avoided uplink resource is an uplink resource which is set between an interfering cell and an interfered cell and used to instruct the interfering cell to perform interference avoidance. To be specific, when a cell neighboring to the local cell is a closed subscriber group cell, a forbidden access cell, a cell without a handover relationship, a mobile relay cell, or a low-power cell, because the user equipment of the local cell is unable to access the neighboring cell, the neighboring cell causes interference to the local cell, and the neighboring cell is an interfering cell; after the user equipment is scheduled by using the agreed avoided uplink resource, when the interfering cell detects that the user equipment of the interfered cell uses the avoided uplink resource, the interfering cell may determine that itself causes interference to the user equipment and therefore may perform interference avoidance. The avoided uplink resource is determined, so that when the interfered cell uses the avoided uplink resource, the interfering cell determines that interference is caused to the interfered cell and avoids using the avoided uplink resource.

2. In the case of frequency resource sharing, when the local cell is an interfered cell and the neighboring cell is an interfering cell, the avoided uplink resource is an uplink resource preset between a resource owner cell and a resource sharer cell and used to instruct the resource sharer cell to perform shared resource coordination (that is, avoid using the shared resource). After the resource sharer cell detects that the resource owner cell uses the obtained avoided uplink resource to schedule the user equipment, the resource sharer cell may perform shared resource coordination to avoid a collision with the resource owner cell in using the shared frequency resource, so that the resource owner cell uses the shared frequency resource preferentially, and hence interference is avoided.

In the foregoing embodiment of the present invention, the avoided uplink resource may be an avoided uplink resource of the local cell, or an avoided uplink resource of the neighboring cell, or a common reserved resource. When it is a common reserved resource, the avoided uplink resource may be preconfigured by an operation, administration, and maintenance (Operation Administration Maintenance, OAM) server. That is, the determining an avoided uplink resource may be: configuring, by the OAM server, the avoided uplink resource for the local cell and the neighboring cell, or negotiating, by the local cell and the neighboring cell, the avoided uplink resource through direct or indirect signaling between neighboring cells, or obtaining, by the local cell and the neighboring cell, the avoided uplink resource by performing calculation according to a physical cell identity.

In addition, determining an avoided downlink resource may also be: configuring, by the OAM server, the avoided downlink resource for the local cell and the neighboring cell, or negotiating, by the local cell and the neighboring cell, the avoided downlink resource through direct or indirect signaling between neighboring cells, or obtaining, by the local cell and the neighboring cell, the avoided downlink resource by performing calculation according to a physical cell identity.

In the foregoing embodiment of the present invention, in the case of interference avoidance, if interference has occurred, the method may further include a step of determining that downlink interference is caused to the user equipment. Specifically, the step may be receiving a measurement report sent by the user equipment, and determining, according to the measurement report, that downlink interference is caused to the user equipment.

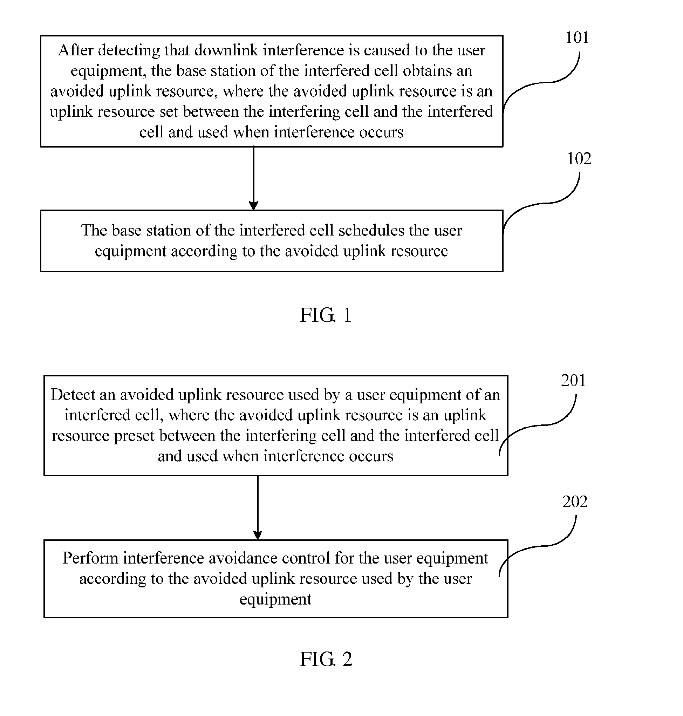

In addition, in the foregoing embodiment of the present invention, when obtaining the avoided uplink resource, the method may further include a step of obtaining the avoided downlink resource of the local cell or the avoided downlink resource of the neighboring cell, and in the case of resource sharing, the local cell is a resource owner cell, and the neighboring cell is a resource sharer cell; and in the case of interference avoidance, the local cell is an interfered cell, and the neighboring cell is an interfering cell. Moreover, in the case of scheduling according the avoided uplink resource, the local cell may further schedule the user equipment according to the avoided downlink resource. Specifically, when interference is caused to the user equipment of the interfered cell, as shown in FIG. 1, the method includes the following steps:

Step 101: After detecting that downlink interference is caused to the user equipment, the base station of the interfered cell obtains an avoided uplink resource, where the avoided uplink resource is an uplink resource preset between the interfering cell and the interfered cell and used when interference occurs. Specifically, this step may be as follows: The user equipment sends a measurement report to the base station of the interfered cell through a measurement report, and then the base station of the interfered cell determines, according to the measurement report, that downlink interference is caused to the user equipment, and obtains the avoided uplink resource.

Step 102: The base station of the interfered cell schedules the user equipment according to the avoided uplink resource. The base station of the interfered cell uses the avoided uplink resource to schedule the user equipment, that is, the user equipment uses the avoided uplink resource to communicate with the base station of the interfered cell. Thereby, when detecting the avoided uplink resource, the base station of the interfering cell knows that downlink resource is caused to the user equipment, and can further perform interference avoidance to avoid causing interference to the user equipment. The method may be reducing the transmit power of the base station of the interfering cell, or using, by the base station of the interfering cell, a resource that does not cause interference to the user equipment to schedule a user equipment thereof.

Specifically, the avoided uplink resource may be an uplink resource reserved for the interfered cell and notified in advance to the base station of the interfering cell, or may be an uplink resource reserved for the interfering cell and notified in advance to the base station of the interfered cell, or may be a used common uplink resource. When interference is caused to the user equipment of the interfered cell, the foregoing embodiment of the present invention, by using the avoided uplink resource for scheduling to instruct the base station of the interfering cell to take measures, is capable of avoiding the interference caused to the user equipment.

Corresponding to the foregoing embodiment, on the opposite side, that is, the interfering cell in the case of interference avoidance and the resource sharer cell in the case of resource sharing, the method includes the following steps: detecting an avoided uplink resource used by a user equipment of a neighboring cell, where the avoided uplink resource is an uplink resource preset between the local cell and the neighboring cell and used to instruct the local cell to perform interference avoidance or shared resource coordination; and performing interference avoidance or shared resource coordination on the user equipment according to the avoided uplink resource used by the user equipment.

Specifically, in the case of interference avoidance, the avoided uplink resource is an uplink resource preset between the interfering cell and the interfered cell and used to instruct the interfering cell to perform interference avoidance, and the performing interference avoidance on the user equipment according to the avoided uplink resource used by the user equipment includes: reducing downlink transmit power of the base station of the interfering cell; or obtaining an associated avoided downlink resource according to the avoided uplink resource used by the user equipment, and using a resource other than the avoided downlink resource to schedule a user equipment thereof, where the avoided downlink resource is an avoided downlink resource of the interfering cell, an avoided downlink resource of the interfered cell, or a common reserved resource.

In the case of resource sharing, the avoided uplink resource is an uplink resource preset between the resource owner cell and the resource sharer cell and used to instruct the resource sharer cell to perform shared resource coordination, and the continuing shared resource coordination according to the avoided uplink resource used by the user equipment includes: obtaining an associated avoided downlink resource according to the avoided uplink resource used by the user equipment, and using a resource other than the avoided downlink resource to schedule a user equipment thereof, where the avoided downlink resource is an avoided downlink resource of the resource owner cell, an avoided downlink resource of the resource sharer cell, or a common reserved resource.

Specifically, with respect to the base station of the interfering cell, corresponding to FIG. 1, the present invention provides a method for resource coordination processing. As shown in FIG. 2, the method includes the following steps:

Step 201: Detect an avoided uplink resource used by a user equipment of an interfered cell, where the avoided uplink resource is an uplink resource preset between the interfering cell and the interfered cell and used when interference occurs. Specifically, this step corresponds to step 102 of the foregoing embodiment. Because the base station of the interfered cell schedules the user equipment by using the avoided uplink resource, the base station of the interfering cell detects that uplink interference is caused to it by the user equipment on the avoided uplink resource.

Step 202: Perform interference avoidance control on the user equipment according to the avoided uplink resource used by the user equipment.

After uplink interference is detected in the foregoing steps, the base station of the interfering cell may further perform interference avoidance to avoid interference.

Specifically, the downlink transmit power of the base station of the interfering cell may be reduced; or an avoided downlink resource may be obtained according to the avoided uplink resource used by the user equipment, and a resource other than the avoided downlink resource is used to schedule a user equipment thereof, in order to avoid causing interference to a user equipment that uses the avoided downlink resource.

In this embodiment, the avoided uplink resource may be an uplink resource reserved for the interfered cell and notified in advance to the base station of the interfering cell, or may be an uplink resource reserved for the interfering cell and notified in advance to the base station of the interfered cell, or may be a used common uplink resource. According to the foregoing embodiment of the present invention, the base station of the interfering cell detects that the user equipment of the interfered cell is using the avoided uplink resource, and therefore further performs interference avoidance to avoid interference to the user equipment.

The avoided uplink resource may be preconfigured by the OAM server, or obtained by negotiation through direct or indirect signaling between neighboring cells, or obtained by performing calculation according to a physical cell identity of the cell. In addition, the avoided downlink resource may also be preconfigured by the OAM server, or obtained by negotiation through direct or indirect signaling between neighboring cells, or obtained by performing calculation according to the physical cell identity of the cell.

In addition, in the cases where the resource is preconfigured, obtained by negotiation, and obtained by performing calculation according to the physical cell identity, the avoided uplink resource or the avoided downlink resource of the cell may be pre-stored in a neighboring cell information table, where the neighboring cell information table may use an existing neighboring cell relation table or other newly established information. In the case of obtaining the resource by performing calculation according to the physical cell identity of the cell, the resource may be obtained by performing calculation when necessary, instead of being stored in the neighboring cell information table.

The obtaining the avoided uplink resource or the avoided downlink resource of the interfering cell by performing calculation according to the physical cell identity of the cell may specifically include: arranging all reserved uplink resources of the cell according to a certain sequence, where a reserved uplink resource corresponding to a modulus which is obtained by dividing the physical cell identity of the cell by the number of the reserved uplink resources of the cell is used as the avoided uplink resource; or arranging all reserved downlink resources of the cell according to a certain sequence, where a reserved downlink resource corresponding to a modulus which is obtained by dividing the physical cell identity of the cell by the number of the reserved downlink resources of the cell is used as the avoided downlink resource.

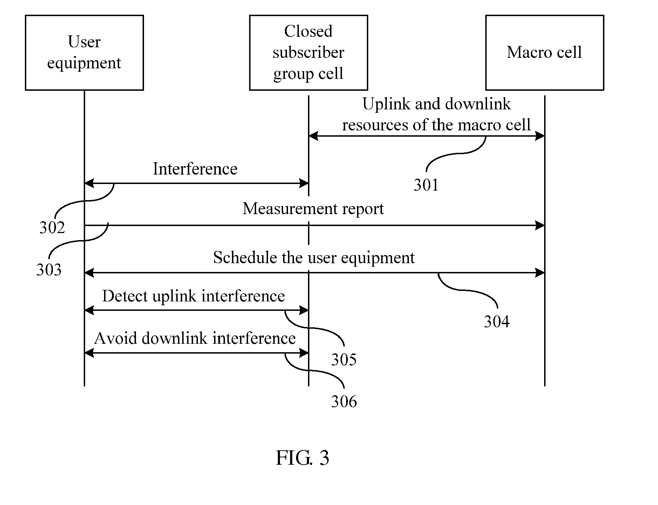

The method for resource coordination processing according to the foregoing embodiment of the present invention is applicable to multiple cases where a user equipment is unable to access an interfering cell and is interfered from the interfering cell. In different cases, the interfering cell may be a closed subscriber group cell, a forbidden access cell, a cell without a handover relationship, a frequency resource sharer cell, a mobile relay cell, or a low-power cell. FIG. 3 shows a problem of downlink interference caused by a CSG cell to a UE when the UE approaches the CSG cell to which the UE has no access right.

Step 301: One or more UL (uplink) resources are reserved for a macro cell (interfered cell), and each reserved UL resource is associated with one or more (preferably one) DL (downlink) resources. The association information is known to the CSG cell in advance (for example, configured by the OAM, notified through inter-cell signaling, or obtained by automatic calculation according to the physical cell identity).

Step 302: The UE approaches the CSG cell, and therefore, the UE receives strong interference from the CSG cell.

Step 303: The UE reports a measurement result of the CSG cell in a measurement report to the macro cell.

Step 304: After the macro cell knows, according to the measurement result reported by the UE, that the UE receives strong interference from the CSG cell, the macro cell schedules the UE by using a reserved UL resource and an associated DL resource. The measurement result specifically includes the PCI of the CSG cell, membership (being a member or not), and RSRP or RSRQ. Because the macro cell knows the PCI range of the CSG cell, the macro cell can determine, according to the membership and signal measurement result reported by the UE, that the UE receives strong interference from the CSG cell.

Step 305: Because the UE approaches the base station of the CSG cell, the base station of the CSG cell detects uplink interference caused by the UE on the reserved UL resource to the CSG cell. Therefore, the base station of the CSG cell may know that itself causes downlink interference to the UE and know that the macro cell uses the UL and DL resources for interference control.

Step 306: According to the previous association relationship between the UL resource and the DL resource, the base station of the CSG cell may implicitly know the DL resource used by the UE, and then avoid scheduling of this DL resource, and thereby avoid causing downlink interference to the UE and ensure that the UE receives no interference and communicates with the serving cell.

From interference discovery by the macro cell in step 303 to interference control of the interfering cell, the corresponding processing delay is the transmission over two air interfaces. Therefore, interference cancellation can be completed quickly. Assuming that the air interface transmission is 1 ms and that the base station scheduling is 2 ms, interference cancellation can be completed within 5-10 ms, which is faster than the conventional ICIC. In addition, because no load indication process for interference coordination is required on a backhaul link (for example, the X2 interface in LTE), the X2 interface is not necessarily required between base stations. Therefore, the investment or bandwidth may be saved.

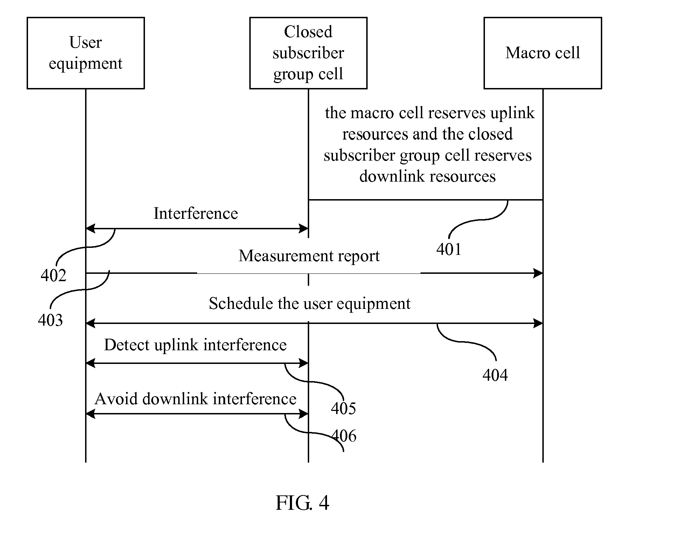

In addition, as shown in FIG. 4, an uplink resource may be reserved for the macro cell, and a downlink resource may be reserved for the CSG cell. Specifically, the following steps are included:

Step 401: One or more uplink (UL) resources are reserved for the macro cell, which is known to the CSG cell in advance (for example, configured by the OAM, notified through signaling, or obtained by automatic calculation; and one or more (preferably one) downlink (DL) resources are reserved for the CSG cell, which is known to the macro cell in advance (for example, configured by the OAM, notified through inter-cell signaling, or obtained by automatic calculation according to the physical cell identity).

Step 402: Because the UE approaches the CSG cell, the UE receives strong interference from the CSG cell.

Step 403: The UE reports a measurement result of the CSG cell in a measurement report to the macro cell.

Step 404: After the macro cell knows, according to the measurement result reported by the UE, that the UE receives strong interference from the CSG cell, the macro cell schedules the UE by using the reserved UL resource and the reserved DL resource of the CSG cell. The measurement result specifically includes the PCI, membership (being a member or not), and RSRP or RSRQ. Because the macro cell knows the PCI range of the CSG cell, the macro cell can determine, according to the membership and signal measurement result reported by the UE, that the UE receives strong interference from the CSG cell.

Step 405: Because the UE approaches the base station of the CSG cell, the base station of the CSG cell detects uplink interference caused by the UE on the reserved UL resource to the CSG cell. Therefore, the base station of the CSG cell may know that itself causes downlink interference to the UE and know that the macro cell uses the UL and DL resources for interference control.

Step 406: The base station of the CSG cell avoids using the reserved UL resource of the macro cell and the reserved DL resource of the CSG cell to schedule a UE within its cell, and thereby avoids causing downlink interference to the UE and ensures that the UE receives no interference and communicates with the serving cell.

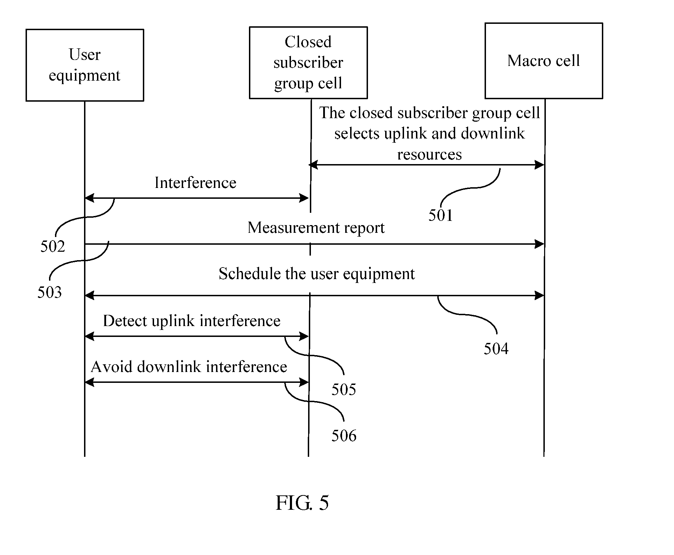

As shown in FIG. 5, one or more UL resources and DL resources may be reserved for an interfering cell. Specifically, the following steps are included:

Step 501: The interfering cell (CSG cell) selects one or more uplink (UL) resources and downlink (DL) resources. These resources are known to the interfered cell in advance (for example, configured by the OAM, notified through inter-cell signaling, or obtained by automatic calculation according to the PCI).

Step 502: Because the UE approaches the CSG cell, the UE receives strong interference from the CSG cell.

Step 503: The UE reports a measurement result of the CSG cell in a measurement report to the macro cell.

Step 504: After the macro cell knows, according to the measurement result reported by the UE, that the UE receives strong interference from the CSG cell, the macro cell schedules the UE by using the UL resource and DL resource selected by the interfering cell. The measurement result specifically includes the PCI, membership (being a member or not), and RSRP or RSRQ. Because the macro cell knows the PCI range of the CSG cell, the macro cell can determine, according to the membership and signal measurement result reported by the UE, that the UE receives strong interference from the CSG cell.

Step 505: Because the UE approaches the base station of the CSG cell, the base station of the CSG cell detects uplink interference caused by the UE on the selected UL resource to the base station of the CSG cell. Therefore, the base station of the CSG cell may know that itself causes downlink interference to the UE and know that the macro cell uses the UL and DL resources for interference control.

Step 506: The CSG cell avoids using the selected UL resource and DL resource to schedule a UE of the CSG cell, and thereby avoids causing downlink interference to the UE and ensures that the UE receives no interference and communicates with the serving cell.

Because after the interfered cell detects interference, the interfered cell uses the UL resource selected by the interfering cell, the information about interference received by the UE is clearly notified to the interfering cell by using this UL resource. Thereby, the resource use can be avoided efficiently, and reduction of transmit power will not cause reduction of coverage. Similarly to the foregoing embodiment, when the interfering cell is a cell that the UE is forbidden to access or is a cell without a handover relationship (set as "no handover" in a neighboring cell relation table), because the UE is not allowed to access the cell or access the cell through a handover, interference is also generated. Specifically, processing may be performed with reference to the foregoing embodiment. The difference lies in that the CSG cell is changed to another restricted access cell, for example, a forbidden access cell or a cell without a handover relationship. In this case, the serving cell knows in advance the cell identity of the restricted access cell, and knows, according to the measurement report of the UE, that the UE is interfered from the restricted access cell.

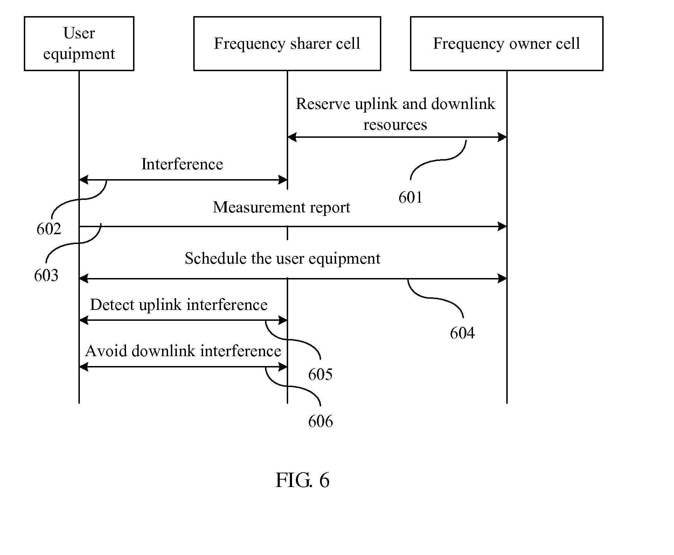

In addition, if the UE has the access right to both cells, the operator wishes the resource owner cell to preferentially occupy and use the radio resource, and the sharer to avoid using the resource, so that possible interference is further avoided. The two cells may be overlapping coverage or continuous coverage. As shown in FIG. 6, it is assumed that the operator of cell 1 is a frequency owner and that cell 1 is a frequency owner cell, and it is assumed that the operator of cell 2 is a frequency sharer and that cell 2 is a frequency sharer cell. The following steps are included:

Step 601: All or part of UL (uplink) resources are reserved for cell 1, and each reserved UL resource is associated with one or more (preferably one) DL (downlink) resources. The association information is known to cell 2 in advance (for example, configured by the OAM, notified through inter-cell signaling, or obtained by automatic calculation according to the PCI).

Step 602: Because the UE approaches cell 2, the UE may receive strong interference from cell 2.

Step 603: The UE reports a measurement result of cell 2 in a measurement report to cell 1.

Step 604: After cell 1 knows, according to the measurement result reported by the UE, that the UE receives strong interference from cell 2, cell 1 schedules the UE by using a reserved UL resource and an associated DL resource. The measurement result specifically includes the PCI and RSRP or RSRQ, where the PCI of cell 2 is preconfigured in cell 1.

Step 605: Because the UE approaches cell 2, cell 2 detects uplink interference caused by the UE on the reserved UL resource to cell 2. Therefore, cell 2 may know that itself causes downlink interference to the UE and know that cell 1 uses the UL and DL resources for interference control.

Step 606: According to the previous association relationship between the UL resource and the DL resource, cell 2 may implicitly know the DL resource used by the UE, and then avoid scheduling of this UL resource and the corresponding DL resource, and thereby avoid causing downlink interference to the UE and ensure that the UE receives no interference and communicates with cell 1.

In the case of frequency sharing, there is another specific embodiment, that is, the resource owner cell and the resource sharer cell agree upon a shared downlink resource and an avoided uplink resource for indicating shared resource coordination, and the two cells both record the association relationship between the avoided uplink resource and the shared downlink resource. When the resource owner cell uses the avoided uplink resource, the resource sharer cell knows this by detection, and determines that the current shared resource is unavailable; otherwise, a resource collision occurs with the resource owner cell. Therefore, the resource sharer cell is set not to use the shared resource to schedule the user equipment when detecting that the resource owner cell uses the avoided uplink resource.

In addition, in the case of a mobile relay cell, because the mobile relay cell is mobile, when the mobile relay cell passes by some UEs, if those UEs are not handed over to the mobile relay cell, strong interference is caused to the UEs; however, if the UEs are handed over to the mobile relay cell, because the mobile relay cell is mobile and may move away after a short time, the UEs are handed over to the original cell again. Consequently, some problems arise. The first problem is that the increase of the number of handovers causes a signaling impact on the network. The second problem is that the service interruption caused by an extra handover affects the user experience. The third problem is possible handover failure.

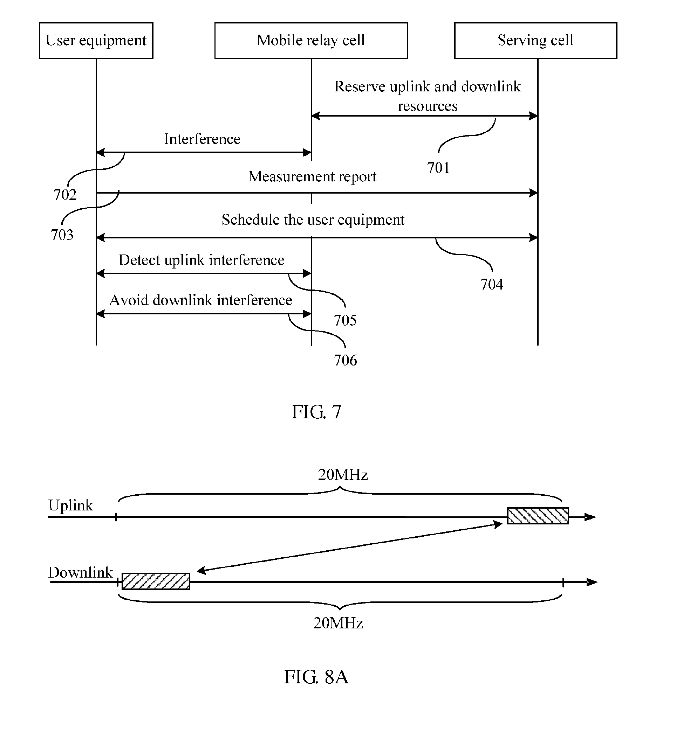

Therefore, in this case, the serving cell may retain the UE as much as possible, and avoidthe caused interference by using the method of this embodiment. Specifically, as shown in FIG. 7, where cell 1 is a serving cell (interfered cell) and cell 2 is a mobile relay cell (interfering cell), the following steps are included:

Step 701: Part of UL (uplink) resources are reserved for cell 1, and each reserved UL resource is associated with one or more (preferably one) DL (downlink) resources. The association information is known to cell 2 in advance (for example, configured by the OAM, notified through inter-cell signaling, or obtained by automatic calculation according to the PCI).

Step 702: Because the UE approaches cell 2, the UE may receive strong interference from cell 2.

Step 703: The UE reports a measurement result of cell 2 in a measurement report to cell 1.

Step 704: After cell 1 knows, according to the measurement result reported by the UE, that the UE receives strong interference from cell 2, cell 1 schedules the UE by using a reserved UL resource and an associated DL resource. The measurement result specifically includes the PCI and RSRP or RSRQ, where the PCI of cell 2 is preconfigured in cell 1.

Step 705: Because the UE approaches cell 2, cell 2 detects uplink interference caused by the UE on the reserved UL resource to cell 2. Therefore, cell 2 may know that itself causes downlink interference to the UE and know that cell 1 uses the UL and DL resources for interference control.

Step 706: According to the previous association relationship between the UL resource and the DL resource, cell 2 may implicitly know the DL resource used by the UE, and then avoid scheduling of this UL resource and the corresponding DL resource, and thereby avoid causing downlink interference to the UE and ensure that the UE receives no interference and communicates with cell 1.

In this embodiment, preferably, cell 1 knows in advance that cell 2 is a mobile relay cell. Because cell 1 does not hand over the UE to cell 2, the problem mentioned above is solved, and interference is avoided. In addition, in the case of a low-power cell, because the low-power cell has low power and small coverage which ranges from ten meters to tens of meters, when the UE passes by the low-power cell quickly, the problems similar to those described in the embodiment shown in FIG. 7 also occur, including the increase of the number of handovers, handover interruption, and possible handover failure. Therefore, a similar technical solution may be adopted, and preferably, cell 1 knows in advance that cell 2 is a low-power cell.

In the embodiment of the present invention, the avoided uplink resource may be a frequency domain resource or a time domain resource. In addition, the avoided downlink resource may also be a frequency domain resource or a time domain resource.

Moreover, specifically, the avoided uplink resource may be any one of a reserved frequency domain range, a reserved physical resource block, or a reserved subframe; and the avoided downlink resource may be any one of a reserved frequency domain range, a reserved physical resource block, or a reserved subframe.

In the specific embodiment of the present invention, the avoided uplink resource and the avoided downlink resource may be associated with each other to form an associated resource group of the avoided uplink resource and the avoided downlink resource. That is, the avoided uplink resource and the avoided downlink resource are both reserved frequency ranges and are associated with each other; or the avoided uplink resource and the avoided downlink resource are both reserved physical resource blocks and are associated with each other; or the avoided uplink resource and the avoided downlink resource are both reserved subframes and are associated with each other; in addition, the avoided uplink resource and the avoided downlink resource may be a combination of a reserved frequency band and a reserved subframe that are associated with each other, that is, one of the avoided uplink resource and the avoided downlink resource is a reserved frequency range, and the other is a reserved subframe associated with the reserved frequency range. Similarly, other combination modes may be used, so long as such combination modes are preset between two neighboring cells.

Specifically, when the avoided uplink resource and the avoided downlink resource are reserved frequency ranges that are associated with each other, for a cell, a subset may be selected from the U L or DL working frequency range of the cell and used as a reserved UL resource or a bound DL resource. For example, a subset may be selected according to a percentage (for example, 10%, 20%, 30%, or 50%), and the percentage may be adjusted (adjusted based on the interference of actual network deployment, or service load condition of the local cell or interfering cell).

In specific implementation, a portion at the edge of a working frequency (for example, maximum 1.25 Mhz, minimum 1.25Mhz, maximum 5Mhz, and minimum 5Mhz, or any combination thereof) may be selected.

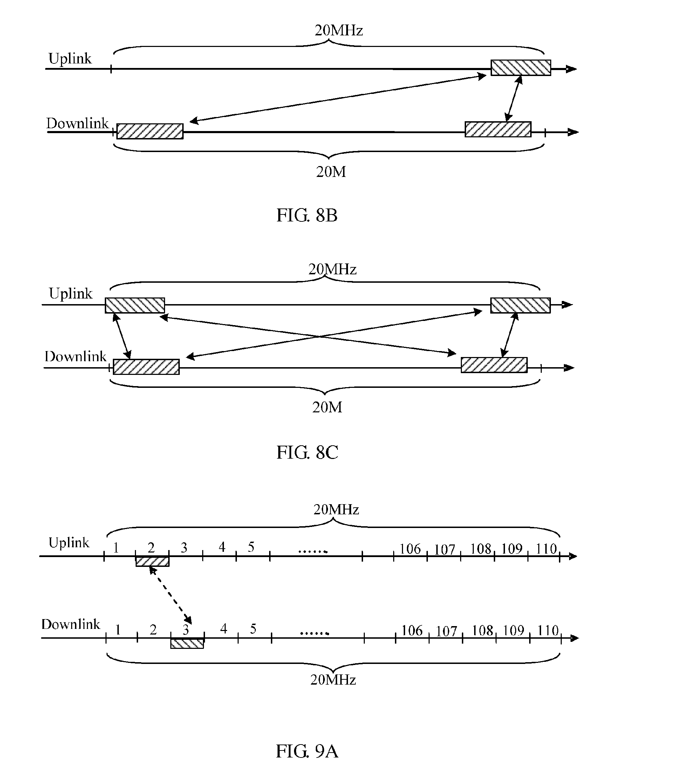

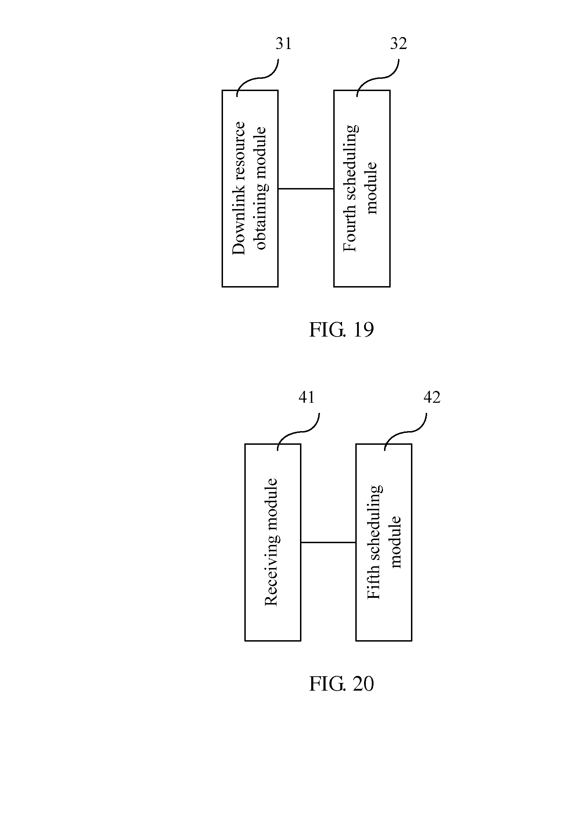

Further, UL and DL resources are divided according to this embodiment, and may be associated. In FIG. 8A, FIG. 8B, and FIG. 8C, 20M is used as an example to describe how to select and associate UL and DL resources. FIG. 8A shows how to respectively reserve and associate an uplink frequency band and a downlink frequency band. FIG. 8B shows how to respectively reserve and associate one uplink frequency band and two downlink frequency bands. FIG. 8C shows how to respectively reserve and associate two uplink frequency bands and two downlink frequency bands.

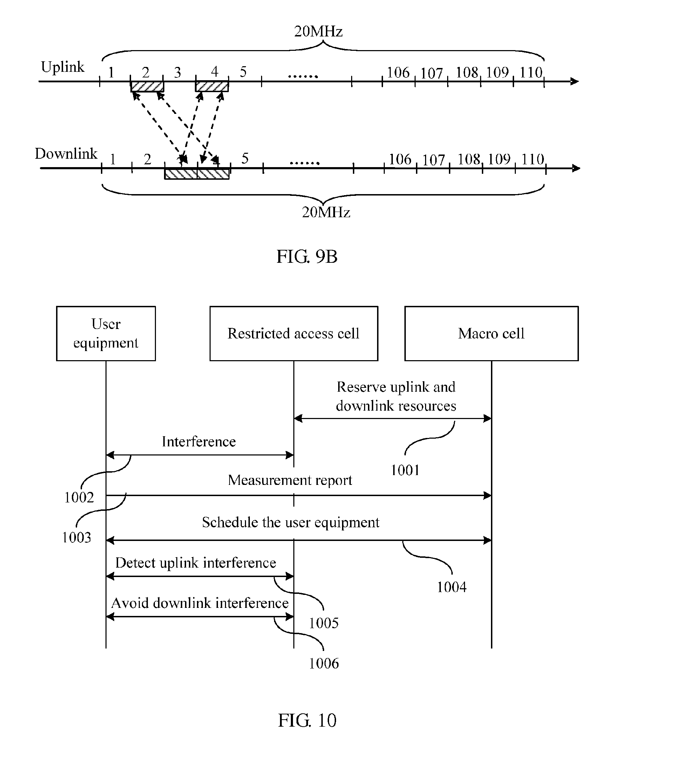

In addition, when the avoided uplink resource and the avoided downlink resource are mutually associated reserved physical resource blocks, the UL or DL resource may be a physic resource block group (PRB Group) including one or more physical resource blocks, or may be multiple discrete or continuous PRBs. As shown in FIGS. 9A and 9B, where 20 MHz UL bandwidth and 20 MHz DL bandwidth in LTE are used as an example, the frequency occupied by each PRB is 180 KHz, and there are 110 PRBs in total. In FIG. 9A, the second UL physical resource block and the third DL physical resource block correspondingly form a physical resource block group. In FIG. 9B, two UL physical resource blocks and two DL physical resource blocks are included, and an association is established between the UL resource blocks and the DL resource blocks.

When the avoided uplink resource and the avoided downlink resource are reserved subframe groups, specifically, resources may be reserved for a cell in the UL time domain of the cell. Taking LTE as an example, this time domain may be measured in units of radio frames, subframes, timeslots, or symbols.

For the uplink, for example, in units of subframes, when the interfered cell detects interference, it schedules the UE on a reserved uplink subframe (for example, subframe 1). When the interfering cell detects that this particular subframe is scheduled, the interfering cell knows that itself causes interference to the other party.

In addition, for a cell, an uplink resource may be reserved in the frequency domain and a downlink resource may be reserved in the time domain. Specifically, reference may be made to the embodiment shown in FIG. 10. As shown in FIG. 10, the following steps are included:

Step 1001: One or more uplink (UL) frequency resources are reserved for a macro cell, and each reserved UL resource is associated with one or more (preferably one) downlink (DL) subframes. The association information is known to a restricted access cell in advance (for example, configured by the OAM, notified through inter-cell signaling, or obtained by automatic calculation according to the PCI).

Step 1002: Because the UE approaches the restricted access cell, the UE receives strong interference from the restricted access cell.

Step 1003: The UE reports a measurement result of the restricted access cell in a measurement report to the macro cell.

Step 1004: After the macro cell knows, according to the measurement result reported by the UE, that the UE receives strong interference from the restricted access cell, the macro cell schedules the UE by using a reserved UL frequency resource and an associated DL subframe.

Step 1005: Because the UE approaches the restricted access cell, the restricted access cell detects uplink interference caused by the UE on the reserved UL resource to the restricted access cell. Therefore, the restricted access cell may know that itself causes downlink interference to the UE and know that the macro cell uses the UL frequency and DL subframe for interference control.

Step 1006: According to the previous association relationship between the UL resource and the DL resource, the restricted access cell may implicitly know the DL subframe used by the UE, and then avoid using this DL subframe to schedule its UE, and thereby avoid causing downlink interference to the UE and ensure that the UE receives no interference and communicates with the serving cell.

The restricted access cell does not use the reserved resource (DL subframe) when there is interference, and may continue to use the reserved resource (DL subframe) when there is no interference, thereby avoiding the waste caused by the case that the DL subframe is not used all the time and improving the resource utilization.

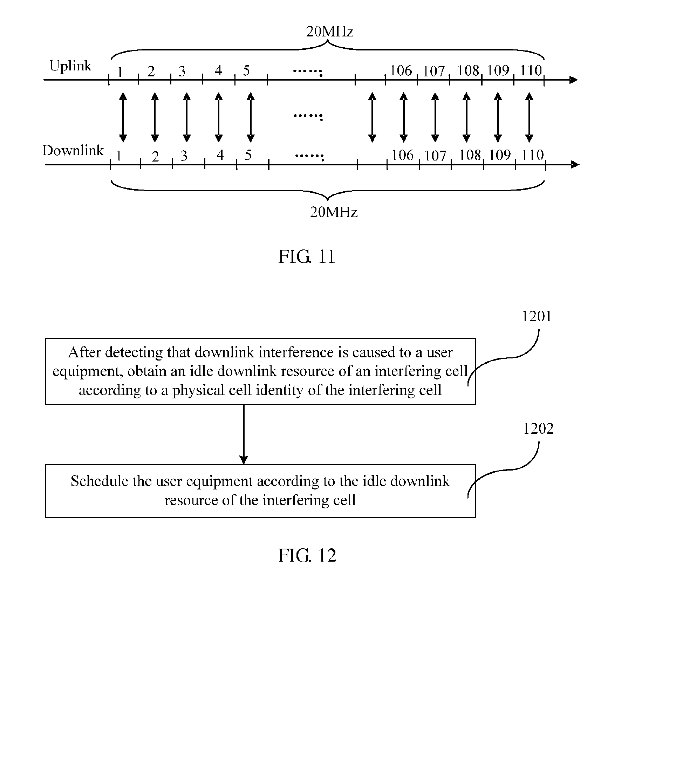

FIG. 11 illustrates a method for associating radio resources, where 20 MHz UL bandwidth and 20 MHz DL bandwidth in LTE are used as an example, the frequency occupied by each PRB is 180 KHz, and there are 110 PRBs in total. In this embodiment, the 110 UL PRBs correspond to the 110 DL PRBs on a one-to-one basis. This association may be a one-way association or a two-way association. The PRBs may be simply arranged according to the sequence numbers of the PRBs, and then associated according to the same sequence or reverse sequence or a user-defined rule to establish the association. When the base station schedules the UE, the uplink and downlink resources are used in pairs.

Taking the association relationship in FIG. 11 as an example, when the fifth UL PRB is used to schedule a UE, if downlink scheduling is required, the fifth DL PRB is used to schedule the UE. If a neighboring base station detects interference of a UL PRB, according to the mapping relationship, the neighboring base station avoids using the corresponding DL PRB to schedule the UE or uses low power to schedule the UE.

As mentioned in the foregoing embodiment of the present invention, the base station may automatically calculate the reserved UL resource (avoided uplink resource) or bound DL resource (associated avoided downlink resource) according to a physical cell identity PCI (or PCI Group). The specific calculation method is as follows: Assuming that the total number of resources is R and that in R, there are M shares of reserved resources, which are R0, R1, R2, R3, R4, ..., Rx respectively, where x = M - 1, the sequence number of a reserved resource corresponding to the PCI of a cell is x = PCI mod M, that is, the remainder of the physical cell identity PCI divided by M.

When PCI groups are used, each PCI belongs to a particular PCI Group, there are 168 PCI groups in LTE in total, and each PCI definitely belongs to one PCI Group of 1-168 PCI Groups. Therefore, the following formula may also be used: x = PCI group mod M.

In the following description, the frequency domain is used as an example. For example, in 20 MHz, there are 110 PRBs in total, and the resources are divided into 11 shares, that is, M = 11; by using the PCI calculation formula, it is known that for a cell of PCI = 121, x = PCI mod M = 121 mod 11 = 0. Then the reserved UL resource or bound DL resource is Rx = R0, namely, the first share of resources after the resources are evenly divided into 11 shares. Therefore, in a cell of PCI = 122, x = PCI mod M = 122 mod 11 = 1. Then the reserved UL resource or bound DL resource is Rx = R1.

In addition, taking the time domain as an example, for the DL, among 10 radio subframes, sf1, sf2, sf3, sf6, sf7, and sf8, totaling 6 sfs (subframes), are used as all resources R, and the reserved resources are respectively R0(sf1), R1(sf2), R2(sf3), R3(sf6), R4(sf7), and R5(sf8), where M = 6. According to formula 1, when PCI = 121, x = PCI mod M = 121 mod 6 = 1. Then the corresponding reserved resource is Rx = R1, namely, sf2 (subframe 2). For the UL, among 10 radio subframes, sf0, sf1, sf2, sf3, sf4, sf5, sf6, sf7, sf8, and sf9, totaling 10 sfs (subframes), are used as all resources R, and the reserved resources are respectively R0(sf0), R1(sf1), R2(sf2), R3(sf3), R4(sf4), R5(sf5), R6(sf6), R7(sf7), R8(sf8), and R9(sf9), where M = 10. According to formula 1, when PCI = 121, x = PCI mod M = 121 mod 10 = 1. Then the corresponding reserved resource is Rx = R1, namely, sf1(subframe 1).

For the UL and DL, calculation may be performed in different modes. For example, both use calculation based on the frequency domain, or both use calculation based on the time domain, or one uses calculation based on the frequency domain and one uses calculation based on the time domain, or only one applies this embodiment.

In addition, for obtaining an avoided uplink resource and an avoided downlink resource by performing calculation according to a PCI, an avoided resource configuration table may be predefined. This table includes at least two columns, that is, index and avoided resource (including an avoided uplink resource and an avoided downlink resource). The physical cell identity of a cell is divided by a particular configuration parameter factor (which may specifically be the configuration quantity in the avoided resource configuration table, namely, the record quantity in the table) to obtain the index of the avoided resource configuration table, and an avoided resource is further obtained by using this index.

Further, when the calculation method of this embodiment is used for both the avoided uplink resource and the avoided downlink resource, the obtained avoided uplink resource and avoided downlink resource may be associated to obtain an association relationship. That is, if the PCI of a cell is determined, the avoided uplink resource and avoided downlink resource of the cell are also determined.

In the embodiment of the present invention, the reserved UL resource (avoided uplink resource) and bound DL resource (avoided downlink resource) are shared by multiple cells or shared by the whole system. Its advantage lies in that the configuration is simple, and that when there are many interfered UEs in a cell, many resources may be used to schedule these UEs. To enable the interfering cell to avoid uplink and downlink resources more accurately and increase resource utilization, the common UL resource and DL resource are respectively further divided into multiple shares, and a UL-DL association is established.

Further, this common UL or DL may be based on a cell type. For example, a CSG HeNB cell adopts a common same configuration, and a Macro cell also adopts another common same configuration; or the reserved UL resource is shared by multiple cells or shared by the whole system, and the bound DL resource is based on a cell granularity.

An embodiment of the present invention further provides a method for resource coordination processing. The method for resource coordination processing is to set an idle downlink resource among available resources of an interfering cell and when an interfered cell detects that interference is caused to a user equipment, obtain the idle downlink resource of the interfering cell according to the physical cell identity of the interfering cell. For the specific steps, reference may be made to FIG. 12. The following steps are included:

Step 1201: After detecting that downlink interference is caused to a user equipment, obtain an idle downlink resource of an interfering cell according to a physical cell identity of the interfering cell.

Step 1202: Schedule the user equipment according to the idle downlink resource of the interfering cell.

The mode of obtaining the idle downlink resource according to the physical cell identity, as described in the foregoing embodiment, may be obtaining from the neighboring cell information table according to the physical cell identity of the interfering cell, where the idle downlink resource of the interfering cell stored in the neighboring cell information table is obtained in advance by performing calculation according to the physical cell identity of the interfering cell; or may be obtaining by performing calculation according to the physical cell identity of the interfering cell by using a calculation mode.

The calculation mode may be: arranging all reserved downlink resources of the interfering cell according to a certain sequence, dividing the physical cell identity of the interfering cell by the number of the reserved downlink resources of the interfering cell to obtain a modulus, and using a reserved downlink resource corresponding to the modulus as the idle downlink resource. The idle downlink resource may be an idle subframe, an idle physical resource block, or an idle frequency range.

In addition, an idle downlink resource configuration table may be predefined, where the table includes at least two columns, that is, index and idle downlink resource configuration. The physical cell identity of a cell is divided by a particular configuration parameter factor (which may specifically be the configuration quantity in the idle downlink resource configuration table, namely, the record quantity in the table) to obtain the index of the idle downlink resource configuration table, and an idle downlink resource configuration is further obtained by using this index.

The following describes in detail how to obtain an avoided resource according to a PCI based on an assumption that an avoided DL resource is an idle subframe. It should be noted that all avoided UL and DL resources (including subframes in the time domain, subframes in frequency domain, PRB, and frequencies) may be implemented by using similar methods, which are not further described herein.

| **Configuration Index** | **Avoided DL Resource Configuration** |
|---|---|
| 0 | Subframe 1 |
| 1 | Subframes 1 and 2 |
| 2 | Subframes 1, 2, and 3 |
| 3 | Subframes 6, 7, and 8 |
| ... | ... |

Assuming that PCI = 97, and that configuration parameter factor = 6, according to the above method, configuration index = PCI mod configuration parameter factor = 97 mod 6 = 1. By searching the table, it may be known that the avoided DL resource configuration of configuration index = 1 is subframes 1 and 2.

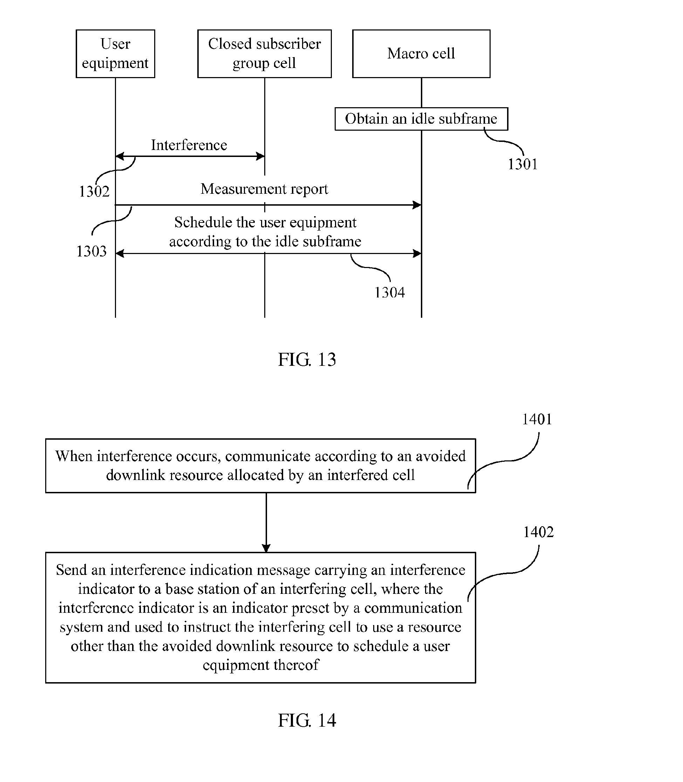

FIG. 13 provides a specific embodiment. As shown in FIG. 13, the embodiment includes the following steps:

Step 1301: A macro cell obtains the PCI of a CSG cell, and calculates a reserved idle subframe of the CSG cell according to the PCI, and may record the idle subframe into its neighboring cell information table.

Step 1302: Because the UE approaches the CSG cell, the UE receives strong interference from the CSG cell.

Step 1303: The UE reports a measurement result of the CSG cell in a measurement report to the macro cell.

Step 1304: After the macro cell knows, according to the measurement result reported by the UE, that the UE receives strong interference from the CSG cell, the macro cell schedules the UE by using the reserved idle subframe of the CSG cell. Specifically, the macro cell obtains the reserved idle subframe of the CSG cell from the neighboring cell information table according to the PCI identity, or without executing step 1301, directly obtains the idle subframe by performing calculation according to the PCI obtained from the measurement report after receiving the measurement report.

An embodiment of the present invention also provides a method for resource coordination processing implemented with the aid of a UE. As shown in FIG. 14, the method includes the following steps:

Step 1401: When interference occurs, perform communication according to an avoided downlink resource allocated by an interfered cell. Specifically, when a user equipment is interfered from an interfering cell, the user equipment sends a measurement report to the base station of its serving cell (interfered cell), and then the interfered cell schedules the user equipment by using the avoided downlink resource.

Step 1402: Send an interference indication message carrying an interference indicator to a base station of an interfering cell, where the interference indicator is an indicator preset by a communication system and used to instruct the interfering cell to use a resource other than the avoided downlink resource to schedule a user equipment thereof. Based on step 1401, the user equipment sends an interference indication message carrying an interference indicator to the base station of the interfering cell to instruct the interfering cell to use a resource other than the avoided downlink resource to schedule a user equipment thereof. Thereby, interference caused to the user equipment of the interfered cell is avoided.

The avoided downlink resource in the embodiment may be an avoided downlink resource of the interfering cell, an avoided downlink resource of the interfered cell, or a common reserved cell, so long as the other party knows the avoided downlink resource.

Further, before step 1402 in the embodiment is executed, a notification message from the base station of the interfered cell instructing the user equipment to send the interference indication message to the interfering cell may be received. The user equipment executes step 1402 after receiving the message.

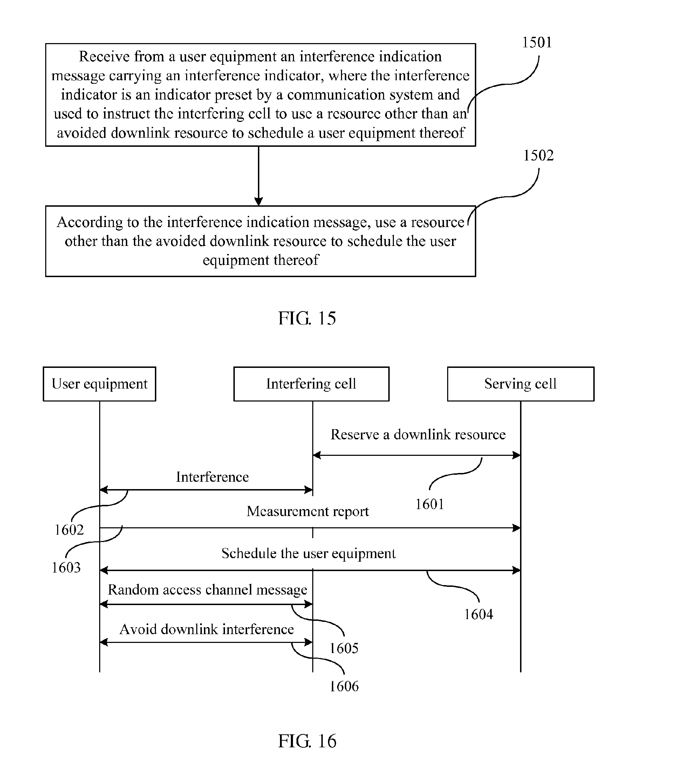

The corresponding procedure executed by a base station of an interfering cell is shown in FIG. 15. As shown in FIG. 15, the following steps are included:

Step 1501: Receive, from a user equipment, an interference indication message carrying an interference indicator, where the interference indicator is an indicator preset by a communication system and used to instruct the interfering cell to use a resource other than an avoided downlink resource to schedule a user equipment thereof.

Step 1502: According to the interference indication message, use a resource other than the avoided downlink resource to schedule the user equipment thereof.

The following embodiment describes resource coordination processing implemented with the aid of a UE. Specifically, as shown in FIG. 16, the following steps are included:

Step 1601: An interfering cell reserves a DL (downlink) resource. The resource is known to the serving cell in advance (for example, configured by the OAM, notified through inter-cell signaling, or obtained by automatic calculation according to a PCI).

Step 1602: When the UE approaches the interfering cell, the UE receives strong interference from the interfering cell.

Step 1603: The UE reports a measurement result of the interfering cell in a measurement report to the serving cell.

Step 1604: After the serving cell knows, according to the measurement result reported by the UE, that the UE receives strong interference from the interfering cell, the serving cell schedules the UE by using the reserved DL resource.

Step 1605: Because the UE approaches the interfering cell, when the UE detects downlink interference, the UE sends a specific random access channel (RACH) message to the interfering cell, where a preamble (preamble) used by the specific RACH message is predetermined. For example, the interfering cell itself broadcasts a preamble for reporting interference. The UE obtains this preamble by reading system broadcast information.

Step 1606: Once the interfering cell detects the RACH message that uses the specific preamble (preamble) (the interfering cell knows that the UE is interfered), the interfering cell avoids scheduling the reserved DL resource, and thereby avoids causing downlink interference to the UE and ensures that the UE receives no interference and communicates with the serving cell.

Alternatively, in step 1604 above, the base station of the serving cell may use a downlink command to inform the UE that a specific RACH message needs to be initiated, or notifies the UE that the UE is scheduled on the reserved DL resource of the interfering cell.

Corresponding to the above method embodiments, an embodiment of an apparatus is provided by the present invention. The apparatus is capable of implementing the procedures of the foregoing method embodiments.

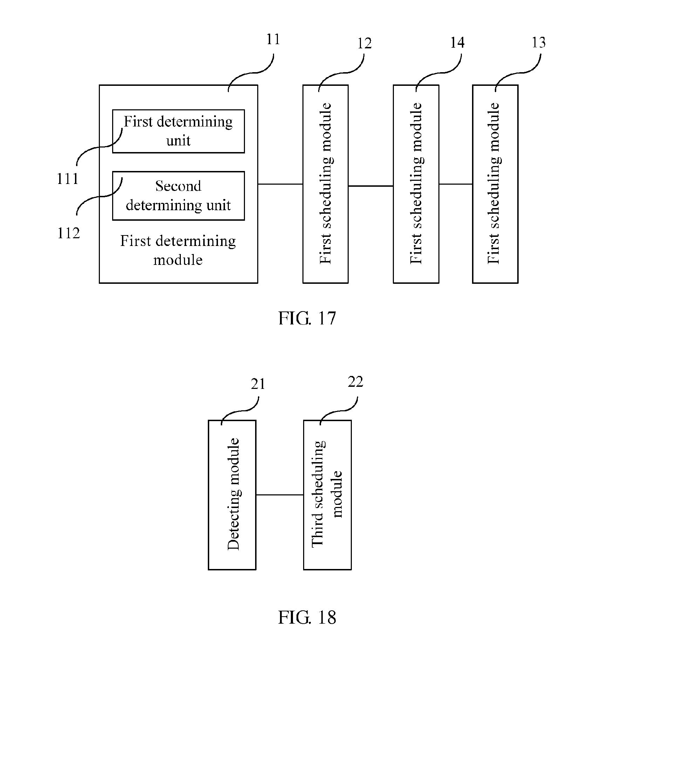

FIG. 17 is a schematic structural diagram of a first embodiment of a device for resource coordination processing according to the present invention. As shown in FIG. 17, the device includes a first determining module 11 and a first scheduling module 12. The first determining module 11 is configured to determine an avoided uplink resource, wherein the avoided uplink resource is an uplink resource which is set between a local cell and a neighboring cell and used to instruct the neighboring cell to perform interference avoidance or shared resource coordination. The first scheduling module 12 is configured to schedule the user equipment according to the avoided uplink resource. The device for resource coordination processing according to the embodiment can be applied in two cases: 1. For the purpose of interference avoidance, the avoided uplink resource is an uplink resource preset between an interfering cell and an interfered cell and used to instruct the interfering cell to perform interference avoidance. To be specific, when a cell neighboring to the local cell is a closed subscriber group cell, a forbidden access cell, a cell without a handover relationship, a mobile relay cell, or a low-power cell, because the user equipment of the local cell is unable to access the neighboring cell, the neighboring cell causes interference to the local cell, and the neighboring cell is an interfering cell; after the user equipment is scheduled by using the agreed avoided uplink resource, when the interfering cell detects that the user equipment of the interfered cell uses the avoided uplink resource, the interfering cell may determine that itself causes interference to the user equipment and therefore may perform interference avoidance. 2. In the case of frequency resource sharing, the avoided uplink resource is an uplink resource preset between a resource owner cell and a resource sharer cell and used to instruct the resource sharer cell to perform shared resource coordination. After the resource sharer cell detects that the resource owner cell uses the obtained avoided uplink resource to schedule the user equipment, the resource sharer cell may perform shared resource coordination to avoid a collision with the resource owner cell in using the shared frequency resource, so that the resource owner cell uses the shared frequency resource preferentially, and hence interference is avoided.

In the device for resource coordination processing according to the embodiment, the first determining module 11 includes a first determining unit 111 or a second determining unit 112. The first determining unit 111 is configured to determine the avoided uplink resource when the local cell is a resource owner cell and the neighboring cell is a resource sharer cell, where the avoided uplink resource is set between the resource owner cell and the resource sharer cell and used to instruct the resource sharer cell to avoid using the avoided uplink resource when the resource owner cell uses the avoided uplink resource. The second determining unit 112 is configured to determine the avoided uplink resource when the local cell is an interfered cell and the neighboring cell is an interfering cell, so that when the interfered cell uses the avoided uplink resource, the interfering cell determines that interference is caused to the interfered cell and avoids using the avoided uplink resource. In addition, when the local cell is an interfered cell and the neighboring cell is an interfering cell, the device for resource coordination processing may further include an interference determining module, which is configured to receive a measurement report sent by the user equipment, and determine, according to the measurement report, that interference is caused to the user equipment.

In addition, the device for resource coordination processing according to the embodiment may further include a second determining module 13 and a second scheduling module 14. The module is configured to determine an avoided downlink resource, where the avoided downlink resource is an avoided downlink resource of the local cell, an avoided downlink resource of the neighboring cell, or a common reserved resource, and the avoided uplink resource is an avoided uplink resource of the local cell, an avoided uplink resource of the neighboring cell, or a common reserved resource. The second scheduling module 14 is configured to schedule the user equipment according to the avoided downlink resource. The first scheduling module and the second scheduling module may be combined.

Many modes may be used to obtain the avoided uplink resource and the avoided downlink resource, that is, the device for resource coordination processing according to the embodiment may further include a receiving module, a resource negotiating module, or a calculating module. The receiving module is configured to receive the avoided uplink resource configured by an OAM server for the local cell and the neighboring cell, and/or receive the avoided downlink resource configured by the OAM server for the local cell and the neighboring cell. The resource negotiating module is configured to negotiate the avoided uplink resource for the local cell and the neighboring cell through direct or indirect signaling between neighboring cells, where the direct signaling may be X2 signaling, and the indirect signaling may be S1 signaling, and/or negotiate the avoided downlink resource for the local cell and the neighboring cell through direct or indirect signaling between neighboring cells. The calculating module is configured to obtain the avoided uplink resource by performing calculation according to the physical cell identity, and/or obtain the avoided downlink resource by performing calculation according to the physical cell identity.

In addition, the avoided uplink resource or the avoided downlink resource in the embodiment may be stored in a neighboring cell relation information table, that is, the device for resource coordination processing may further include a neighboring cell information table, where the neighboring cell relation table is configured to store a mapping relationship between the physical cell identity of the neighboring cell and the avoided uplink resource of the neighboring cell, and/or store a mapping relationship between the physical cell identity of the neighboring cell and the avoided downlink resource of the neighboring cell. Corresponding to the embodiment shown in FIG. 17, the present invention further provides another device for resource coordination processing. As shown in FIG. 18, the present invention further provides another device for resource coordination processing. The device for resource coordination processing includes a detecting module 21 and a third scheduling module 22. The detecting module 21 is configured to detect an avoided uplink resource used by a user equipment, where the avoided uplink resource is an uplink resource which is set between a local cell and a neighboring cell and used to instruct the neighboring cell to perform interference avoidance or shared resource coordination. The third scheduling module 22 is configured to perform interference avoidance or shared resource coordination on the user equipment according to the voided uplink resource used by the user equipment.

Specifically, the third scheduling module is applicable to the case of interference avoidance, that is, when the local cell is an interfered cell and the neighboring cell is an interfering cell, the avoided uplink resource is an avoided uplink resource which is set between the interfering cell and the interfered cell and used to instruct the interfering cell to perform interference avoidance. The third scheduling module includes: a power adjusting unit, configured to reduce downlink transmit power of the interfering cell; or a first resource scheduling unit, configured to obtain an associated avoided downlink resource according to the avoided uplink resource used by the user equipment, and use a resource other than the avoided downlink resource to schedule a user equipment thereof, where the avoided downlink resource is an avoided downlink resource of the interfering cell, an avoided downlink resource of the interfered cell, or a common reserved resource. Or in the case of resource sharing, when the local cell is a resource owner cell and the neighboring cell is a resource sharer cell, the avoided uplink resource is an uplink resource which is set between the resource owner cell and the resource sharer cell and used to instruct the resource sharer cell to perform shared resource coordination. The third scheduling module includes a second resource scheduling unit, configured to obtain an associated avoided downlink resource according to the avoided uplink resource used by the user equipment, and use a resource other than the avoided downlink resource to schedule a user equipment thereof, where the avoided downlink resource is an avoided downlink resource of the resource owner cell, an avoided downlink resource of the resource sharer cell, or a common reserved resource.

For other structures and functions of the device for resource coordination processing, reference may be made to the foregoing method embodiments, and no repeated description is provided herein.

As shown in FIG. 19, an embodiment of the present invention further provides a device for resource coordination processing. The device includes a downlink resource obtaining module 31 and a fourth scheduling module 32. The downlink resource obtaining module 31 is configured to obtain an idle downlink resource of an interfering cell according to a physical cell identity of the interfering cell after determining that downlink interference is caused to a user equipment. The fourth scheduling module 32 is configured to schedule the user equipment according to the idle downlink resource of the interfering cell.

In the embodiment, an idle downlink resource is set among available resources of an interfering cell, and when an interfered cell detects that a user equipment is interfered, the idle downlink resource of the interfering cell is obtained according to the physical cell identity of the interfering cell.

For other structures and functions of the device for resource coordination processing, reference may be made to the foregoing method embodiments, and no repeated description is provided herein.

As shown in FIG. 20, an embodiment of the present invention further provides a device for resource coordination processing. The device includes a receiving module 41 and a fifth scheduling module 42. The receiving module 41 is configured to receive, from a user equipment, an interference indication message carrying an interference indicator, where the interference indicator is an indicator preset by a communication system and used to instruct an interfering cell to avoid using an avoided downlink resource to schedule a user equipment thereof. The fifth scheduling module 42 is configured to avoid using the avoided downlink resource to schedule the user equipment thereof according to the interference indication message. This is a technical solution for resource coordination processing implemented with the aid of a UE. The device for resource coordination processing is configured in the base station of the interfering cell to receive, from an interfered user equipment, an interference indication message carrying an interference indicator and perform interference avoidance.

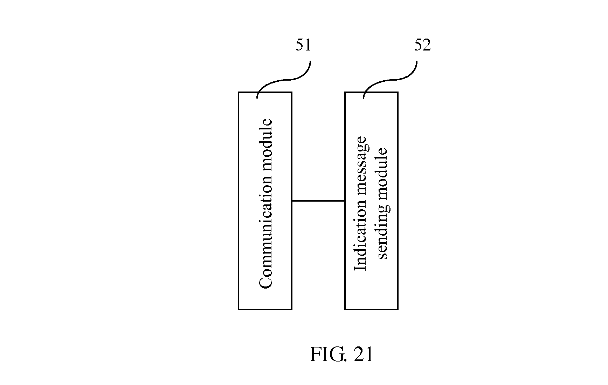

Corresponding to the device for resource coordination processing as shown in FIG. 20, a user equipment is further provided by an embodiment of the present invention. As shown in FIG. 21, the user equipment includes a communication module 51 and an indication message sending module 52. The communication module 51 is configured to: when interference occurs, perform communication according to an avoided downlink resource allocated by an interfered cell. The indication message sending module 52 is configured to send an interference indication message carrying an interference indicator to a base station of an interfering cell, where the interference indicator is an indicator set by a communication system and used to instruct the interfering cell to avoid using the avoided downlink resource to schedule a user equipment thereof.

In addition, an embodiment of the present invention further provides a base station including the device for resource coordination processing according to the embodiments shown in FIG. 17 to FIG. 20.

For other structures and functions of the device for resource coordination processing, reference may be made to the foregoing method embodiments, and no repeated description is provided herein.

The method for resource coordination processing, device for resource coordination processing, and base station, and user equipment provided by the embodiments of the present invention are applicable to cases where a neighboring cell is a closed subscriber group cell, a forbidden access cell, a cell without a handover relationship, a mobile relay cell, or a low-power cell and interference is easily caused to a user equipment because the user equipment is unable to the cell and cases where a resource owner cell uses shared frequency resources preferentially when frequency resources are shared. The embodiments of the present invention effectively solve possible interference problems by using avoided uplink resources and avoided downlink resources for scheduling.

Persons of ordinary skill in the art may understand that all or part of the steps of the methods in the embodiments may be implemented by a program instructing relevant hardware. The program may be stored in a computer readable storage medium. When the program is run, the foregoing steps of the methods in the embodiments are performed. The storage medium may be any medium capable of storing program codes, such as ROM, RAM, magnetic disk, or optical disk.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solution described in the foregoing embodiments or make equivalent replacements to some technical features thereof; without departing from the spirit and scope of the technical solution of the embodiments of the present invention.

## Claims

1. A method for resource coordination processing, comprising:
determining an avoided uplink resource, wherein the avoided uplink resource is an uplink resource which is set between a local cell and a neighboring cell and used to instruct the neighboring cell to perform interference avoidance or shared resource coordination; and
scheduling the user equipment according to the avoided uplink resource.

2. The method for resource coordination processing according to claim 1, wherein: the local cell is a resource owner cell; the neighboring cell is a resource sharer cell; the avoided uplink resource is a shared resource between the local cell and the neighboring cell; and the determining the avoided uplink resource, wherein the avoided uplink resource is the uplink resource which is set between the local cell and the neighboring cell and used to instruct the neighboring cell to perform interference avoidance or shared resource coordination, comprises:
determining the avoided uplink resource, wherein the avoided uplink resource is set between the resource owner cell and the resource sharer cell and used to instruct the resource sharer cell to avoid using the avoided uplink resource when the resource owner cell uses the avoided uplink resource.

3. The method for resource coordination processing according to claim 1, wherein when the local cell is an interfered cell and the neighboring cell is an interfering cell, the determining the avoided uplink resource, wherein the avoided uplink resource is the uplink resource which is set between the local cell and the neighboring cell and used to instruct the neighboring cell to perform interference avoidance or shared resource coordination, comprises:
determining the avoided uplink resource, so that when the interfered cell uses the avoided uplink resource, the interfering cell determines that interference is caused to the interfered cell and avoids using the avoided uplink resource.

4. The method for resource coordination processing according to claim 3, wherein the method further comprises:
receiving a measurement report sent by the user equipment, and determining, according to the measurement report, that downlink interference is caused to the user equipment.

5. The method for resource coordination processing according to any one of claims 1-4, wherein:
the avoided uplink resource is an avoided uplink resource of the local cell, an avoided uplink resource of the neighboring cell, or a common reserved resource.

6. The method for resource coordination processing according to claim 5, wherein the determining the avoided uplink resource comprises:
configuring, by an operation, administration, and maintenance OAM server, the avoided uplink resource for the local cell and the neighboring cell, or negotiating, by the local cell and the neighboring cell, the avoided uplink resource through direct or indirect signaling between neighboring cells, or obtaining, by the local cell and the neighboring cell, the avoided uplink resource by performing calculation according to a physical cell identity.

7. The method for resource coordination processing according to claim 6, wherein the obtaining the avoided uplink resource by performing calculation according to the physical cell identity comprises:
arranging all reserved uplink resources of the cell according to a certain sequence, dividing the physical cell identity of the cell by the number of the reserved uplink resources of the cell to obtain a modulus, wherein a reserved uplink resource corresponding to the modulus is the avoided uplink resource.

8. The method for resource coordination processing according to claim 7, wherein the method further comprises:
determining an avoided downlink resource, wherein the determining the avoided downlink resource comprises:
configuring, by the OAM server, the avoided downlink resource for the local cell and the neighboring cell, or negotiating, by the local cell and the neighboring cell, the avoided downlink resource through direct or indirect signaling between neighboring cells, or obtaining, by the local cell and the neighboring cell, the avoided downlink resource by performing calculation according to a physical cell identity.

9. The method for resource coordination processing according to claim 8, wherein the obtaining the avoided downlink resource by performing calculation according to the physical cell identity comprises:
arranging all reserved downlink resources of the cell according to a certain sequence, dividing the physical cell identity of the cell by the number of the reserved downlink resources of the cell to obtain a modulus, wherein a reserved downlink resource corresponding to the modulus is the avoided downlink resource.

10. The method for resource coordination processing according to claim 8, wherein the determining the avoided uplink resource comprises:
obtaining the avoided uplink resource of the neighboring cell from a neighboring cell information table according to the physical cell identity of the neighboring cell, wherein the neighboring cell information table stores a mapping relationship between the physical cell identity of the neighboring cell and the avoided uplink resource of the neighboring cell; and/or
the determining the avoided downlink resource comprises:
obtaining the avoided downlink resource of the neighboring cell from the neighboring cell information table according to the physical cell identity of the neighboring cell, wherein the neighboring cell information table stores the mapping relationship between the physical cell identity of the neighboring cell and the avoided downlink resource of the neighboring cell.

11. The method for resource coordination processing according to claim 8, wherein:
the avoided uplink resource is a frequency domain resource or a time domain resource;
and/or
the avoided downlink resource is a frequency domain resource or a time domain resource.

12. The method for resource coordination processing according to claim 8, wherein:
the avoided uplink resource is one of a reserved frequency domain range, a reserved physical resource block, or a reserved subframe; and/or
the avoided downlink resource is one of a reserved frequency domain range, a reserved physical resource block, or a reserved subframe.

13. The method for resource coordination processing according to claim 8, wherein the avoided downlink resource and the avoided uplink resource are associated with each other, and when the local cell is the resource owner cell and the neighboring cell is the resource sharer cell, the method further comprises:
scheduling, by the resource owner cell, the user equipment according to the avoided downlink resource, and avoiding using, by the resource sharer cell, the avoided downlink resource to schedule a user equipment of the resource sharer cell; or
when the local cell is an interfered cell and the neighboring cell is an interfering cell, the method further comprises:
scheduling, by the interfered cell, the user equipment according to the avoided downlink resource, and avoiding using, by the interfering cell, the avoided downlink resource to schedule a user equipment of the interfering cell.

14. The method for resource coordination processing according to any one of claims 1-13, wherein:
the neighboring cell is a closed subscriber group cell, a forbidden access cell, a cell without a handover relationship, a frequency resource sharer cell, a mobile relay cell, or a low-power cell.

15. The method for resource coordination processing according to any one of claims 8-13, wherein the method further comprises:
detecting, by the neighboring cell, the avoided uplink resource used by the user equipment; and
reducing, by the neighboring cell, downlink transmit power according to the avoided uplink resource used by the user equipment, and/or using a resource other than the avoided downlink resource to schedule the user equipment.

16. A method for resource coordination processing, comprising:
detecting an avoided uplink resource used by a user equipment of a neighboring cell, wherein the avoided uplink resource is an uplink resource which is set between a local cell and the neighboring cell and used to instruct the local cell to perform interference avoidance or shared resource coordination; and
performing interference avoidance or shared resource coordination on the user equipment according to the avoided uplink resource used by the user equipment.

17. The method for resource coordination processing according to claim 16, wherein:
when the local cell is an interfered cell and the neighboring cell is an interfering cell, the avoided uplink resource is an avoided uplink resource which is set between the interfering cell and the interfered cell and used to instruct the interfering cell to perform interference avoidance; and the performing interference avoidance on the user equipment according to the avoided uplink resource used by the user equipment comprises:
reducing downlink transmit power of the interfering cell; or
obtaining an associated avoided downlink resource according to the avoided uplink resource used by the user equipment, and using a resource other than the avoided downlink resource to schedule a user equipment of the interfered cell, wherein the avoided downlink resource is an avoided downlink resource of the interfering cell, an avoided downlink resource of the interfered cell, or a common reserved resource.

18. The method for resource coordination processing according to claim 16, wherein:
when the local cell is a resource owner cell and the neighboring cell is a resource sharer cell,
the avoided uplink resource is an uplink resource which is set between the resource owner cell and the resource sharer cell and used to instruct the resource sharer cell to perform shared resource coordination; and the performing shared resource coordination according to the avoided uplink resource used by the user equipment comprises:
obtaining an associated avoided downlink resource according to the avoided uplink resource used by the user equipment, and using a resource other than the avoided downlink resource to schedule a user equipment of the resource owner cell, wherein the avoided downlink resource is an avoided downlink resource of the resource owner cell, an avoided downlink resource of the resource sharer cell, or a common reserved resource.

19. A method for resource coordination processing, comprising:
after detecting that downlink interference is caused to a user equipment, obtaining an idle downlink resource of an interfering cell according to a physical cell identity of the interfering cell; and
scheduling the user equipment according to the idle downlink resource of the interfering cell.

20. The method for resource coordination processing according to claim 19, wherein the method further comprises:
obtaining the idle downlink resource of the interfering cell by performing calculation according to the physical cell identity of the interfering cell, and storing the idle downlink resource of the interfering cell into a neighboring cell information table; and
the obtaining the idle downlink resource of the interfering cell according to the physical cell identity of the interfering cell comprises:
obtaining the idle downlink resource of the interfering cell from the neighboring cell information table according to the physical cell identity of the interfering cell, wherein the neighboring cell information table stores a mapping relationship between the physical cell identity of the interfering cell and the idle downlink resource.

21. The method for resource coordination processing according to claim 20, wherein the obtaining the idle downlink resource of the interfering cell by performing calculation according to the physical cell identity of the interfering cell comprises:
arranging all reserved downlink resources of the interfering cell according to a certain sequence, dividing the physical cell identity of the interfering cell by the number of the reserved downlink resources of the interfering cell to obtain a modulus, and using a reserved downlink resource corresponding to the modulus as the idle downlink resource.

22. A method for resource coordination processing, comprising:
when interference occurs, performing communication according to an avoided downlink resource allocated by an interfered cell; and
sending an interference indication message carrying an interference indicator to a base station of an interfering cell, wherein the interference indicator is an indicator preset by a communication system and used to instruct the interfering cell to avoid using the avoided downlink resource to schedule a user equipment of the interfering cell.

23. The method for resource coordination processing according to claim 22, wherein before sending an interference indication message carrying an interference indicator to a base station of an interfering cell, the method further comprises:
receiving from a base station of the interfered cell a notification message for instructing a user equipment to send the interference indication message to the interfering cell.

24. A method for resource coordination processing, comprising:
receiving from a user equipment an interference indication message carrying an interference indicator, wherein the interference indicator is an indicator preset by a communication system and used to instruct the interfering cell to use a resource other than an avoided downlink resource to schedule a user equipment of the interfering cell; and
according to the interference indication message, using a resource other than the avoided downlink resource to schedule the user equipment of the interfering cell.

25. A device for resource coordination processing, comprising:
a first determining module, configured to determine an avoided uplink resource, wherein the avoided uplink resource is an uplink resource which is set between a local cell and a neighboring cell and used to instruct the neighboring cell to perform interference avoidance or shared resource coordination; and
a first scheduling module, configured to schedule a user equipment according to the avoided uplink resource determined by the first determining module.

26. The device for resource coordination processing according to claim 25, wherein the first determining module comprises:
a first determining unit, configured to determine the avoided uplink resource when the local cell is a resource owner cell and the neighboring cell is a resource sharer cell, wherein the avoided uplink resource is set between the resource owner cell and the resource sharer cell and used to instruct the resource sharer cell to avoid using the avoided uplink resource when the resource owner cell uses the avoided uplink resource; or
a second determining unit, configured to determine the avoided uplink resource when the local cell is an interfered cell and the neighboring cell is an interfering cell, so that when the interfered cell uses the avoided uplink resource, the interfering cell determines that interference is caused to the interfered cell and avoids using the avoided uplink resource.

27. The device for resource coordination processing according to claim 26, wherein when the local cell is an interfered cell and the neighboring cell is an interfering cell, the device further comprises:
an interference determining module, configured to receive a measurement report sent by the user equipment, and determine, according to the measurement report, that interference is caused to the user equipment.

28. The device for resource coordination processing according to claim 26, further comprising:
a second determining module, configured to determine an avoided downlink resource, wherein the avoided downlink resource is an avoided downlink resource of the local cell, an avoided downlink resource of the neighboring cell, or a common reserved resource, and the avoided uplink resource is an avoided uplink resource of the local cell, an avoided uplink resource of the neighboring cell, or a common reserved resource; and
a second scheduling module, configured to schedule the user equipment according to the avoided downlink resource determined by the second determining module.

29. The device for resource coordination processing according to any one of claims 26-28, further comprising:
a receiving module, configured to receive the avoided uplink resource configured by an OAM server for the local cell and the neighboring cell, and/or receive the avoided downlink resource configured by the OAM server for the local cell and the neighboring cell; or
a resource negotiating module, configured to negotiate the avoided uplink resource for the local cell and the neighboring cell through direct or indirect signaling between neighboring cells, and/or negotiate the avoided downlink resource for the local cell and the neighboring cell through direct or indirect signaling between neighboring cells; or
a calculating module, configured to obtain the avoided uplink resource by calculation according to a physical cell identity, and/or obtain the avoided downlink resource by performing calculation according to the physical cell identity.

30. The device for resource coordination processing according to any one of claims 26-28, further comprising:
a neighboring cell information table, configured to store a mapping relationship between the physical cell identity of the neighboring cell and the avoided uplink resource of the neighboring cell, and/or store the mapping relationship between the physical cell identity of the neighboring cell and the avoided downlink resource of the neighboring cell.

31. A device for resource coordination processing, comprising:
a detecting module, configured to detect an avoided uplink resource used by a user equipment, wherein the avoided uplink resource is an uplink resource which is set between a local cell and a neighboring cell and used to instruct the neighboring cell to perform interference avoidance or shared resource coordination; and
a third scheduling module, configured to perform interference avoidance or shared resource coordination on the user equipment according to the voided uplink resource used by the user equipment and detected by the detecting module.

32. The device for resource coordination processing according to claim 31, wherein when the local cell is an interfered cell and the neighboring cell is an interfering cell, the avoided uplink resource is an avoided uplink resource which is set between the interfering cell and the interfered cell and used to instruct the interfering cell to perform interference avoidance, and the third scheduling module comprises:
a power adjusting unit, configured to reduce downlink transmit power of the interfering cell; or
a first resource scheduling unit, configured to obtain an associated avoided downlink resource according to the avoided uplink resource used by the user equipment, and use a resource other than the avoided downlink resource to schedule a user equipment of the interfered cell, wherein the avoided downlink resource is an avoided downlink resource of the interfering cell, an avoided downlink resource of the interfered cell, or a common reserved resource.

33. The device for resource coordination processing according to claim 31, wherein when the local cell is a resource owner cell and the neighboring cell is a resource sharer cell, the avoided uplink resource is an uplink resource which is set between the resource owner cell and the resource sharer cell and used to instruct the resource sharer cell to perform shared resource coordination, and the third scheduling module comprises:
a second resource scheduling unit, configured to obtain an associated avoided downlink resource according to the avoided uplink resource used by the user equipment, and use a resource other than the avoided downlink resource to schedule a user equipment of the resource owner cell, wherein the avoided downlink resource is an avoided downlink resource of the resource owner cell, an avoided downlink resource of the resource sharer cell, or a common reserved resource.

34. A device for resource coordination processing, comprising:
a downlink resource obtaining module, configured to obtain an idle downlink resource of an interfering cell according to a physical cell identity of the interfering cell after determining that downlink interference is caused to a user equipment; and
a fourth scheduling module, configured to schedule the user equipment according to the idle downlink resource of the interfering cell which is obtained by the downlink resource obtaining module.

35. A device for resource coordination processing, comprising:
a receiving module, configured to receive, from a user equipment, an interference indication message carrying an interference indicator, wherein the interference indicator is an indicator preset by a communication system and used to instruct an interfering cell to avoid using the avoided downlink resource to schedule a user equipment of the interfering cell; and
a fifth scheduling module, configured to avoid using the avoided downlink resource to schedule the user equipment of the interfering cell according to the interference indication message received by the receiving module.

36. A user equipment, comprising:
a communication module, configured to: when interference occurs, perform communication according to an avoided downlink resource allocated by an interfered cell; and
an indication message sending module, configured to send an interference indication message carrying an interference indicator to a base station of an interfering cell, wherein the interference indicator is an indicator set by a communication system and used to instruct the interfering cell to avoid using the avoided downlink resource to schedule a user equipment of the interfering cell.

37. A base station, comprising the device for resource coordination processing according to any one of claims 25-35.
